# EUROPEAN PATENT APPLICATION

(11) **EP 1 207 467 A2**
(43) Date of publication of application: **22.05.2002**
(21) Application number: 01309455.2
(22) Date of filing: 08.11.2001
(51) Int. Cl.: G06F 17/30

(54) **Highlighting world wide web documents of special interest in a displayed session history list of web documents received during a web access session at a receiving web display station**

(30) Priority: 16.11.2000 US 714734
(71) Applicant: International Business Machines Corporation, Armonk, NY 10504 (US)
(72) Inventor: McBrearty, Gerald Francis, c/o IBM United Kingdom, Winchester, Hampshire SO21 2JN (GB); Mullen, Shawn Patrick, c/o IBM United Kingdom Ltd., Winchester, Hampshire SO21 2JN (GB); Shieh, Johnny Meng-Han, c/o IBM United Kingdom Ltd, Winchester, Hampshire SO21 2JN (GB)
(74) Representative: Waldner, Philip

(57) **Abstract**

A World Wide Web (Web) user is enabled to readily distinguish received hypertext documents of special in-terest from other received hypertext documents when he is backtracking through a sequence of documents received at a receiving display station during a particular browsing session. The user is enabled to designate a received hypertext document to be of special interest in an imple-mentation for tracking all hypertext documents received at said receiving display station. The user may inter-actively display a session history list of all tracked hypertext documents received at said receiving display station during a Web access session together with indica-tions on the displayed history list of the documents designated to be of special interest. The indicating implementation may highlight the documents of special interest, e.g. by using a different color for the documents of interest.

The procedure is particularly effective in systems, which in the interest of simplicity and brevity, identify the listed Web documents in the session history list by only the higher level domains in the listed Web documents' addresses. In such history lists, one or more domain levels are left out of each listed received docu-ment's address to thereby render the listed documents in-distinguishable from each other. With the present inven-tion, the user has the benefit of highlighting to distin-guish the Web documents of interest which might otherwise be indistinguishable from the session history list alone.

## Description

### Technical Field

The present invention relates to computer managed communication networks such as the World Wide Web (Web) and, particularly, to systems, processes and programs for reducing users' time spent in accessing and browsing through numerous Web documents which may be of possible interest to the user.

### Background of Related Art

The past decade has been marked by a technological revolution driven by the convergence of the data processing industry with the consumer electronics industry. The effect has, in turn, driven technologies which have been known and available but relatively quiescent over the years. A major one of these technologies is the Internet or Web related distribution of documents, media and programs. The convergence of the electronic entertainment and consumer industries with data processing exponentially accelerated the demand for wide ranging communication distribution channels, and the Web or Internet, which had quietly existed for over a generation as a loose academic and government data distribution facility, reached "critical mass" and commenced a period of phenomenal expansion. With this expansion, businesses and consumers have direct access to all matter of documents, media and computer programs.

In addition, Hypertext Markup Language (HTML), which had been the documentation language of the Internet or Web for years, offered direct hyperlinks between Web pages embedded in such Web pages. This even further exploded the use of the Internet or Web. It was now possible for the Web browser or wanderer to spend literally hours going through document after document in often less than productive excursions through the Web. These excursions often strained the users' time and resources. A significant source of this drain is in the Web page itself (the basic document page of the Web).

Web documents or pages have hyperlinks setting forth terms and topics which the user may interactively click on or select to access other Web documents which, in turn, respectively have their own hyperlinks selectable by the user to access the next Web documents. Thus, browsing through Web documents often involves the time consuming process of following a thread of hyperlinked Web documents through several levels of hyperlinks, then backing up to a Web document at an earlier level, selecting another hyperlink in that document and then following another thread of hyperlinked documents through several levels.

Web developers and users are continually seeking implementations to make this Web document browsing process less cumbersome and more user friendly. At present, there are many effective browsing routines by which the user may backtrack through where he has been and passed through in his navigation of the Web in a particular session. While these approaches certainly do help the user in relocating Web pages and documents of interest and particular hyperlinks on these pages of interest, they still require that the user spend considerable time going through documents in the backtracked sequence which are of little no interest. It should also be considered that the organization of Web pages and their hyperlinks are based upon what is of universal or global user interest. On the other hand, the particular user's interests may be quite specific and not follow any universal logic.

### Summary of the Present Invention

The present invention addresses the browsing user's particular needs in browsing through the Web by enabling the user to readily distinguish received hypertext documents of special interest from other received hypertext documents when he is backtracking through a sequence of documents received at a receiving display station during a particular browsing session. The invention involves the combination of means at a receiving display station enabling a user to designate a received hypertext document to be of special interest in combination with means for tracking all hypertext documents received at said receiving display station. There are means for displaying a session history list of all tracked hypertext documents received at said receiving display station during a Web access session together with means for indicating on the displayed history list the documents designated to be of special interest. The means for indicating may highlight the documents of special interest by, for example, using a different color for the documents of interest.

As will be hereinafter described in greater detail, the invention is particularly effective in systems which, in the interest of simplicity and brevity, identify the listed Web documents in the session history list by only the higher level domains in the listed Web documents' addresses. In such history lists, one or more domain levels are left out of each listed received document's address to thereby render the listed documents indistinguishable from each other. With the present invention, the user has the benefit of the highlighting to distinguish the Web documents of interest which might otherwise be indistinguishable from the session history list alone.

The present invention may be conveniently implemented in the browser serving the receiving display station, which includes the above-mentioned means, enabling a user to designate a received hypertext document to be of special interest; means for tracking all hypertext documents received at said receiving display station; means for displaying a session history list of all tracked hypertext documents; and means for indicating on said displayed history list, the documents designated to be of special interest.

### Brief Description of the Drawings

The present invention will be better understood and its numerous objects and advantages will become more apparent to those skilled in the art by reference to the following drawings, in conjunction with the accompanying specification, in which:
Fig. 1 is a block diagram of a data processing system including a central processing unit and network connections via a communications adapter which is capable of implementing the receiving display station on which Web documents designated to be of interest are highlighted in session history lists;
Fig. 2 is a generalized diagrammatic view of a Web portion upon which the present invention may be implemented;
Fig. 3 is a diagrammatic view of a browsing session history list without the present invention;
Fig. 4 is a diagrammatic view of a browsing session history list of the present invention wherein received Web documents of special interest are highlighted;
Fig. 5 is an illustrative flowchart describing the setting up of the process of the present invention for providing a session history list of received Web documents wherein documents of special interest are highlighted; and
Fig. 6 is a flowchart of an illustrative run of the process set up in Fig. 5.

### Detailed Description of the Preferred Embodiment

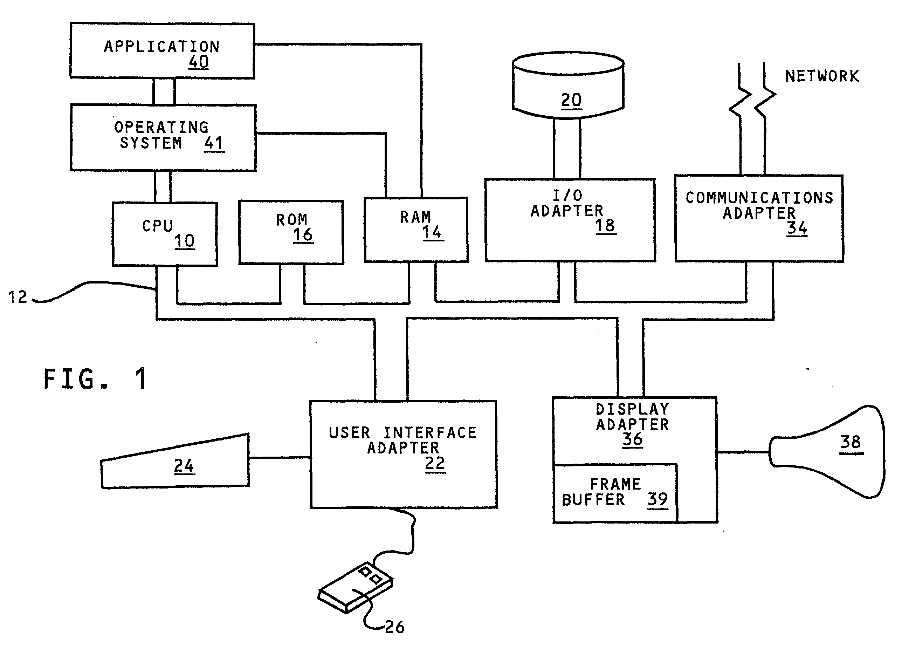

Referring to Fig. 1, a typical data processing terminal is shown which may function as the Web display stations used for receiving Web pages, for Web browsing and for creating browsing session history lists in which received Web documents of special interest are highlighted.

A central processing unit (CPU) 10, such as one of the PC microprocessors or workstations, e.g. RISC System/6000™ (RS/6000) series available from International Business Machines Corporation (IBM), is provided and interconnected to various other components by system bus 12. An operating system 41 runs on CPU 10, provides control and is used to coordinate the function of the various components of Fig. 1. Operating system 41 may be one of the commercially available operating systems such as the AIX 6000™ operating system available from IBM; Microsoft® Windows® 98 or WindowsNT®, as well as UNIX and AIX operating systems. Application programs 40, controlled by the system, are moved into and out of the main memory Random Access Memory (RAM) 14. These programs include the programs of the present invention for creating browsing session history lists in which received Web documents of special interest are highlighted, which will be subsequently described in combination with any conventional Web browser, such as the Netscape Navigator 3.0™ or Microsoft® Internet Explorer. A Read Only Memory (ROM) 16 is connected to CPU 10 via bus 12 and includes the Basic Input/Output System (BIOS) that controls the basic computer functions. RAM 14, I/O adapter 18 and communications adapter 34 are also interconnected to system bus 12. I/O adapter 18 may be a Small Computer System Interface (SCSI) adapter that communicates with the disk storage device 20. Communications adapter 34 interconnects bus 12 with an outside network enabling the data processing system to communicate with other such systems over a Local Area Network (LAN) or a Wide Area Network (WAN), which includes, of course, the Web or Internet. The terms, Web or Internet, are meant to be generally interchangeable and are so used in the present description of the distribution network. I/O devices are also connected to system bus 12 via user interface adapter 22 and display adapter 36. Keyboard 24 and mouse 26 are all interconnected to bus 12 through user interface adapter 22. It is through such input devices that the user may interactively relate to Web pages. Display adapter 36 includes a frame buffer 39, which is a storage device that holds a representation of each pixel on the display screen 38. Images may be stored in frame buffer 39 for display on monitor 38 through various components; such as a digital to analog converter (not shown) and the like. By using the aforementioned I/O devices, a user is capable of inputting information to the system through the keyboard 24 or mouse 26 and receiving output information from the system via display 38.

Before going further into the details of specific embodiments, it will be helpful to understand from a more general perspective the various elements and methods which may be related to the present invention. Since the major aspect of the present invention is directed to Web pages transmitted over global networks, such as the Web or Internet, an understanding of networks and their operating principles would be helpful. We will not go into great detail in describing the networks to which the present invention is applicable. For details on Web nodes, objects and links, reference is made to the text, Mastering the Internet, G. H. Cady et al., published by Sybex Inc., Alameda, CA, 1996; or the text, Internet: The Complete Reference, Millennium Edition, Margaret Young et al., Osborne/McGraw-Hill, Berkeley, CA, 1999. Any data communication system which interconnects or links computer controlled systems with various sites defines a communications network. Of course the Internet or Web is a global network of a heterogeneous mix of computer technologies and operating systems. Higher level objects are linked to the lower level objects in the hierarchy through a variety of network server computers.

Web documents are conventionally implemented in HTML language, which is described in detail in the text entitled Just Java, van der Linden, 1997, SunSoft Press, particularly at Chapter 7, pp. 249-268, dealing with the handling of Web pages; and also in the above-referenced Mastering the Internet, particularly pp. 637-642, on HTML in the formation of Web pages.

In addition, aspects of this invention will involve Web browsers. A general and comprehensive description of browsers may be found in the above-mentioned Mastering the Internet text at pp. 291-313. More detailed browser descriptions may be found in the above-mentioned Internet: The Complete Reference, Millennium Edition text at Chapter 19, pp. 419-454, on the Netscape Navigator; Chapter 20, pp. 455-494, on the Microsoft Internet Explorer; and Chapter 21, pp. 495-512, covering Lynx, Opera and other browsers.

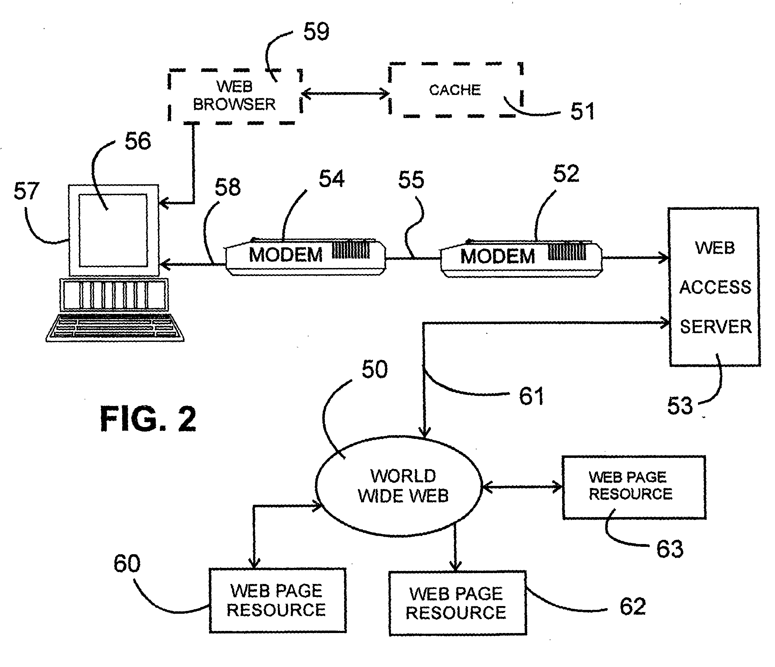

A generalized diagram of a portion of the Web, to which the computer controlled display terminal 57 used for Web page receiving during searching or browsing, is connected as shown in Fig. 2. Computer display terminal 57 may be implemented by the computer system set up in Fig. 1, and connection 58 (Fig. 2) is the network connection shown in Fig. 1. For purposes of the present embodiment, computer 57 serves as a Web display station and has received displayed Web page 56, which is one of a sequence of Web pages containing an embedded hyperlink to other Web pages.

Reference may be made to the above-mentioned Mastering the Internet, pp. 136-147, for typical connections between local display stations to the Web via network servers, any of which may be used to implement the system on which this invention is used. The system embodiment of Fig. 2 has a host-dial connection. Such host-dial connections have been in use for over 30 years through network access servers 53 which are linked 61 to the Web 50. The servers 53 may be maintained by a service provider to the client's display terminal 57. The host's server 53 is accessed by the client terminal 57 through a normal dial-up telephone linkage 58 via modem 54, telephone line 55 and modem 52. The HTML file representative of the Web page 56 has been downloaded to display terminal 57 through Web access server 53 via the telephone line linkages from server 53, which may have accessed them from the Internet 50 via linkage 61. The Web browser program 59 operates within the display terminals 57 to control the communication with the Web access server 53 to thereby download and display the accessed Web pages 56 on terminal 57. The Web access server 53 uses any search engines to access via the Web 50 and obtain Web documents from appropriate Web resources such as databases 60, 62 and 63.

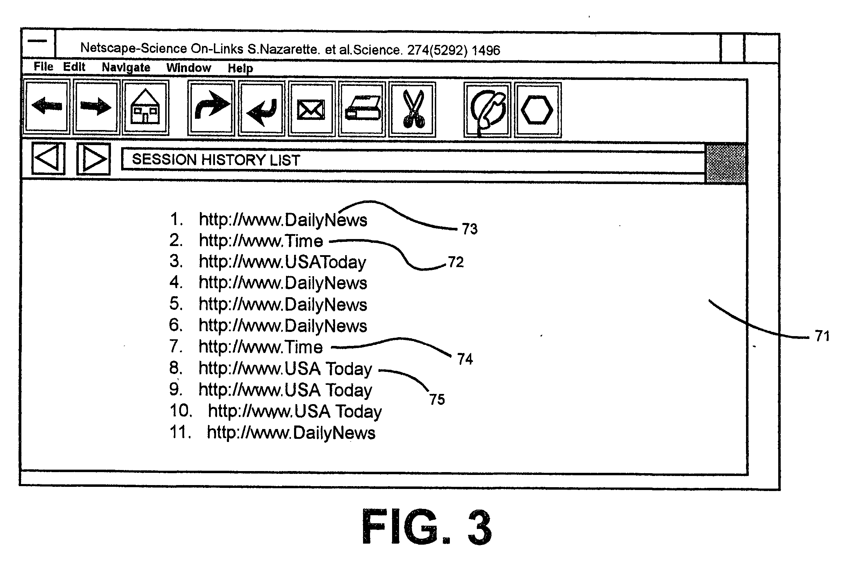

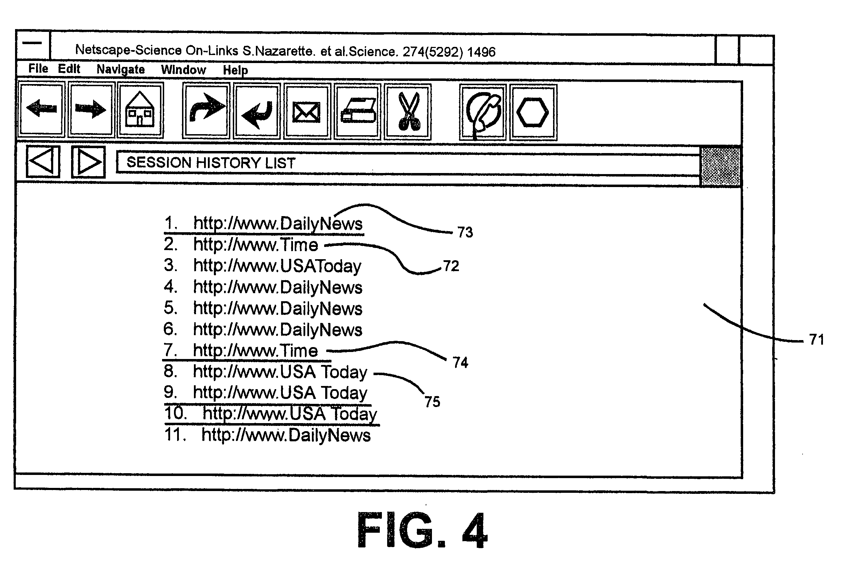

With this setup, the present invention, which will be subsequently described in greater detail with respect to Figs. 3 and 4, may be carried out using Web browser 59 and associated cache 51 (Fig. 2) to create browsing session history lists in which received Web documents of special interest are highlighted. Fig. 3, is an illustration of a session history list in the absence of the present invention. For this example, assume that during a Web browsing session, the user, who is interested in visiting Cuba, navigates through Web documents from the following Web addresses in the sequence shown:
1. http://www.DailyNews.com/travel/Cuba.html
2. http://www.Time.com/foods/Cuba.html
3. http://www.USAToday.com/politics/Cuba.html
4. http://www.DailyNews.com/politics/Cuba.html
5. http://www.DailyNews.com/foods/Cuba.html
6. http://www.DailyNews.com/history/Cuba.html
7. http://www.Time.com/travel/Cuba.html
8. http://www.USAToday.com/Castro/Cuba.html
9. http://www.USAToday.com/travel/Cuba.html
10. http://www.USAToday.com/airfares/Cuba.html
11. http://www.DailyNews.com/travel/Haiti.html

At some point when the user wishes to backtrack through received documents which may be of interest to him, he gets the display screen shown in Fig. 3. The display window 71 includes session history list 72 but the above sequence of documents is each defined only by the high level domains in their addresses: Daily News 73; Time 74; and USAToday 75. From this list, the user cannot distinguish the Web documents which have the subject matter of interest to him, i.e. travel to Cuba.

On the other hand, with the present invention, the user has the option of designating those documents of special interest. It turns out that the 1st, 7th, 9th and 10th documents relate to travel to Cuba. The user has designated them to be of interest. For this purpose, the browser menu bar (the same menu bar which offers [Bookmark]), may offer the user selection **[Indicate].**

By making this selection on each of the above choices, the user signifies his interest, and the chosen documents: 1, 7, 9 and 10 will be highlighted when the session history list is brought up as shown in Fig. 4.

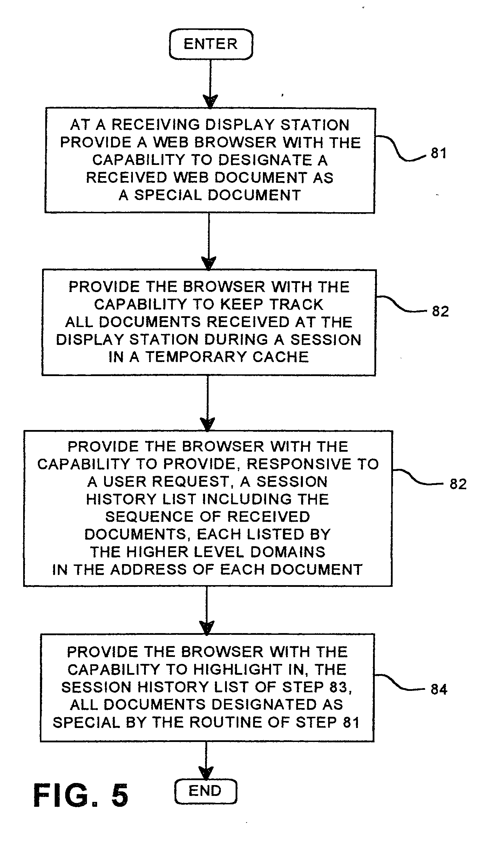

Fig. 5 is a flowchart showing the development of a process according to the present invention for creating browsing session history lists in which received Web documents of special interest are highlighted. Most of the programming functions in the process of Fig. 5 have already been described in general with respect to Figs. 3 and 4. A Web browser is provided at a receiving display station on the Web for accessing Web pages in the conventional manner and loading them at the display station, step 81. The browser has the capability of designating a received Web document as a special document. The browser also has the capability of keeping track of all received documents in a temporary cache, step 82. The browser is also provided with the capability in response to a user request, to produce a displayed session history list of received Web documents. In such a list, for simplicity and brevity it is often standard to identify the listed Web documents in the session history list by only the higher level domains in the listed Web documents' addresses, step 83. The browser is provided with the capability, step 84, of highlighting in the session history list of step 83, all documents designated as special in step 81.

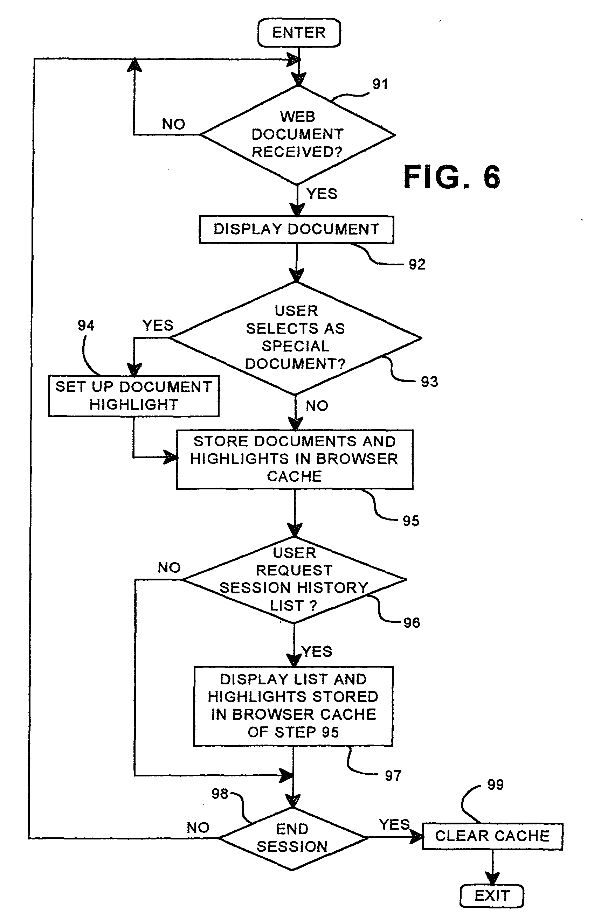

The running of the process set up in Fig. 5 and described in connection with Figs. 3 and 4 will now be described with respect to the flowchart of Fig. 6. Let us assume that we are in a Web browsing session through the browser. The flowchart represents some steps in a routine which will illustrate the operation of the invention. The browser accesses the Web documents. First, a determination is made as to whether a Web document is received, step 91. If No, the process is returned to step 91 and a Web document is awaited. If Yes, a Web document is received, the document is displayed, step 92. Then, a determination is made as to whether the document has been selected as a document of special interest, step 93. If Yes, the document is set up for highlighting, step 94, and the document and its indicative highlighting are stored in a list in the browser cache, step 95. If the determination in step 93 is No, the document is not of special interest, then the process proceeds directly to step 95 where the document is listed in the browser cache. A determination is then made, step 96, as to whether the user has requested a session history list. If Yes, the session history list with appropriate highlights for documents of interest (display of Fig. 4) is displayed, step 97. At this point, or if the determination in step 96 is No, a determination is conveniently made, step 98, as to whether the session is being ended. If Yes, the browser cache is cleared, step 99, and the process is exited. If the decision from step 98 is No, the session is not over, then the process is returned to step 91 and the next Web document is awaited.

One of the preferred implementations of the present invention is in application program 40, i.e. a browser program made up of programming steps or instructions resident in RAM 14, Fig. 1, of a Web receiving station during various Web operations. Until required by the computer system, the program instructions may be stored in another readable medium, e.g. in disk drive 20 or in a removable memory, such as an optical disk for use in a CD ROM computer input or in a floppy disk for use in a floppy disk drive computer input. Further, the program instructions may be stored in the memory of another computer prior to use in the system of the present invention and transmitted over a LAN or a WAN, such as the Web itself, when required by the user of the present invention. One skilled in the art should appreciate that the processes controlling the present invention are capable of being distributed in the form of computer readable media of a variety of forms.

Although certain preferred embodiments have been shown and described, it will be understood that many changes and modifications may be made therein without departing from the scope and intent of the appended claims.

## Claims

1. In a World Wide Web (Web) communication network with user access via a plurality of data processor controlled interactive receiving display stations for displaying received hypertext documents of at least one display page containing embedded hyperlinks to other hypertext documents accessible from sources on the Web, a system enabling a user to distinguish received hypertext documents of special interest from other received hypertext documents comprising:
means at a receiving display station enabling a user to designate a received hypertext document to be of special interest;
means for tracking all hypertext documents received at said receiving display station;
means for displaying a session history list of all tracked hypertext documents received at said receiving display station during a Web access session; and
means for indicating on said displayed history list, the documents designated to be of special interest.

2. The network system of claim 1 wherein said means for indicating highlight the designated documents.

3. The network system of claim 2 wherein said means for indicating provide a different color for the designated documents.

4. The network system of claim 1, 2 or 3 wherein the history list includes the domain name without at least the lowest level domain of each tracked document.

5. The network system of claim 4 wherein said means for indicating highlight the designated documents.

6. The network system of claim 2 wherein said receiving display station further includes a user interactive Web browser, said Web browser including:
said means enabling a user to designate a received hypertext document to be of special interest;
said means for tracking all hypertext documents received at said receiving display station;
said means for displaying a session history list of all tracked hypertext documents; and
said means for indicating on said displayed history list, the documents designated to be of special interest.

7. In a Web communication network with user access via a plurality of data processor controlled interactive receiving display stations for displaying received hypertext documents of at least one display page containing embedded hyperlinks to other hypertext documents accessible from sources on the Web, a method enabling a user to distinguish received hypertext documents of special interest from other received hypertext documents comprising:
enabling a user at a receiving display station to designate a received hypertext document to be of special interest;
tracking all hypertext documents received at said receiving display station;
displaying a session history list of all tracked hypertext documents received at said receiving display station during a Web access session; and
indicating on said displayed history list, the documents designated to be of special interest.

8. The method of claim 7 wherein said step of indicating highlights the designated documents.

9. The method of claim 8 wherein said step of indicating provides a different color for the designated documents.

10. The method of claim 7, 8 or 9 wherein the history list includes the domain name without at least the lowest level domain of each tracked document.

11. The network system of claim 10 wherein said step of indicating highlights the designated documents.

12. The method of claim 8 further including a Web browser method operatively associated with said receiving display station, said Web browser including said steps of:
enabling a user at a receiving display station to designate a received hypertext document to be of special interest;
tracking all hypertext documents received at said receiving display station;
displaying a session history list of all tracked hypertext documents received at said receiving display station; and
indicating on said displayed history list, the documents designated to be of special interest.

13. A computer program having code recorded on a computer readable medium for enabling a user to distinguish received hypertext documents of special interest from other received hypertext documents in a Web communication network with user access via a plurality of data processor controlled interactive receiving display stations for displaying received hypertext documents of at least one display page containing embedded hyperlinks to other hypertext documents accessible from sources on the Web, said program comprising:
means at a receiving display station enabling a user to designate a received hypertext document to be of special interest;
means for tracking all hypertext documents received at said receiving display station;
means for displaying a history list of all tracked hypertext documents received at said receiving display station; and
means for indicating on said displayed history list, the documents designated to be of special interest.

14. The computer program of claim 13 wherein said means for indicating highlight the designated documents.

15. The computer program of claim 14 wherein said means for indicating provide a different color for the designated documents.

16. The computer program of claim 13, 14 or 15 wherein the history list includes the domain name without at least the lowest level domain of each tracked document.

17. The computer program of claim 16 wherein said means for indicating highlight the designated documents.

18. The computer program of claim 14 wherein said receiving display station further includes a user interactive Web browser program, said Web browser program including:
said means enabling a user to designate a received hypertext document to be of special interest;
said means for tracking all hypertext documents received at said receiving display station;
said means for displaying a session history list of all tracked hypertext documents; and
said means for indicating on said displayed history list, the documents designated to be of special interest.
